# EUROPÄISCHE PATENTSCHRIFT

(11) **EP 2 278 312 B1**
(45) Veröffentlichungstag und Bekanntmachung des Hinweises auf die Patenterteilung: **19.03.2014**
(21) Anmeldenummer: 10164155.3
(22) Anmeldetag: 27.05.2010
(51) Int. Cl.: G01N 27/28

(54) **Sondeneinrichtung zur Messung von Prozessgrößen, insbesondere Schubstangenarmatur**
Sample device for measuring process loads, in particular push rod fitting
Dispositif de sonde destiné à la mesure de grandeurs de processus, notamment armature de jambe de force

(30) Priorität: 16.07.2009 DE 102009033558
(43) Veröffentlichungstag der Anmeldung: 26.01.2011
(73) Patentinhaber: Knick Elektronische Messgeräte GmbH & Co. KG, 14163 Berlin (DE)
(72) Erfinder: Schiffer, Dipl.-Ing. Jens-Hendrik, 14480 Potsdam (DE)
(74) Vertreter: Hübner, Gerd

(56) Entgegenhaltungen:
- EP-A1- 0 952 448
- EP-A1- 1 156 323
- EP-A2- 0 391 838
- DE-A1-102005 036 865
- DE-A1-102007 030 584

## Beschreibung

Die Erfindung betrifft eine Sondeneinrichtung zur Messung von Prozessgrößen, insbesondere eine Schubstangenarmatur mit den im Oberbegriff des Anspruchs 1 angegebenen Merkmalen.

Derartige Sondeneinrichtungen sind in vielfach unterschiedlichen Ausführungsformen bekannt. Sie dienen zur Messung von Prozessgrößen, wie etwa pH-Wert, Leitfähigkeit oder Sauerstoffkonzentration in einem Prozessfluid, wie es beispielsweise in der Lebensmittelindustrie, Pharmazeutik, Chemie oder Biogenetik in Produktionsanlagen verarbeitet wird. Mit Hilfe der Sondeneinrichtung werden die Messsensoren in den Prozess eingefahren, wo sie bestimmte Prozessparameter mit Hilfe ihres Messsensors erfassen.

Als grundsätzliche Bauelemente weisen solche Sondeneinrichtungen eine Sondenhalterung zu ihrer Anbindung an einen Prozessbehälter, einen für die Erfassung eines Prozessparameters ausgelegten Messsensor, der in einem axial verschieblichen Tauchrohr angeordnet ist, und eine Antriebseinrichtung zum axialen Verschieben des Tauchrohrs mit Messsensor zwischen einer in den Prozessbehälter eingefahrenen Messstellung und einer daraus ausgefahrenen Stellung auf. Zur Abdichtung des Ringspaltes zwischen Tauchrohr und Messsensor sind üblicher Weise Ringdichtungen vorgesehen, die verhindert, dass Prozessfluid insbesondere in der Messstellung durch den Ringspalt nach außen tritt.

Die Sondenhalterung weist einerseits einen als Zapfenteil ausgebildeten Prozessanschluss zur Anbindung an den Ingoldstutzen eines Prozessbehälter mittels einer Überwurfmutter auf. Andererseits weist sie ein Spülkammerteil auf, das in dem Flansch unter Zwischenlage mehrerer O-RingDichtungen sitzt. In diesem Spülkammerteil ist die Spülkammer angelegt, die über verschiedene Zu- und Abführkanäle mit Reinigungs-, Spül- und Kalibrierflüssigkeit beschickbar ist, um die aus dem Prozessbehälter in die Spülkammer zurückgefahrene Messsonde zu reinigen und zu kalibrieren.

Derartige Sondeneinrichtungen mit Prozessadaptionen für Ingoldstutzen, wie sie beispielsweise in der DE 10 2007 030 584 A1 oder der EP 0 391 838 A2 gezeigt sind, sind nur in Ausführungen aus Metall, wie beispielsweise Edelstahl, NickelBasis-Legierungen, wie z.B. Hastelloy® oder Titan bekannt, da sie zur sicheren Halterung der Sondeneinrichtung robust ausgeführt sein müssen. Insbesondere für aggressive Prozessflüssigkeiten ist es allerdings wünschenswert, dass die mit Prozessflüssigkeit in Kontakt kommenden Zonen des Zapfenteils, also insbesondere der in den Ingoldstutzen eingreifende Zapfen selbst, aus Kunststoff bestehen können. Bisher wurde davon allerdings Abstand genommen, da übliche Kunststoffmaterialien in der Regel keine ausreichende Festigkeit für eine robuste und stabile Halterung der Armatur aufweisen.

Die EP 1 156 323 A1 und die 0 952 448 A1 zeigen weitere Prozessadaptionen.

Es liegt der Erfindung die Aufgabe zugrunde, eine Sondeneinrichtung mit einer Prozessadaption für Ingoldstutzen zu schaffen, bei der die prozessberührenden Teile und insbesondere der Zapfen aus Kunststoff bestehen, jedoch eine ausreichend stabile und robuste Halterung möglich wird.

Diese Aufgabe wird durch die im Kennzeichnungsteil des Anspruches 1 angegebene Zweiteilung des Zapfenteils in einen äußeren, mit der Überwurfmutter in Eingriff stehenden Haltering aus Metall und einen darin verankerten, in den Ingoldstutzen einsetzbaren Zapfen aus Kunststoffmaterial gelöst.

Der innere, aus Kunststoff bestehende Teil dichtet damit zum Prozess ab und bildet die die Spülkammer umgrenzenden Flächen. Der äußere Teil besteht aus Metall und insbesondere Edelstahl, er trägt die Überwurfmutter und überträgt somit alle Kräfte vom Anschluss des Prozessbehälters, also dem Ingoldstutzen, zur weiteren Sondeneinrichtung. Insoweit ist also nach wie vor eine stabile Halterung der Armatur bei gleichzeitiger optimaler Materialanpassung der prozessberührenden Teile des Zapfenteils gewährleistet. Dabei ist erwähnenswert, dass selbst bei einem an sich unwahrscheinlichen Bruch des in den Haltering eingesetzten Zapfens aus Kunststoff die Prozessanbindung der Armatur nach wie vor druckhaltend ist. Somit geht auch von einem solchen Störfaktor keine direkte Gefährdung aus.

Zusammenfassend wird durch die Erfindung erreicht, dass der dünnwandige Zapfen keine mechanischen Kräfte - insbesondere nicht die der am Zapfenteil angreifenden Überwurfmutter - aufnehmen muss. Durch den zweischaligen Aufbau des Zapfenteils ist die innere Schale in Form des Zapfens aus Kunststoff kräftetechnisch von der äußeren Schale in Form des Halterings aus Metall abgekoppelt. Letzterer trägt die Überwurfmutter und nimmt damit alle relevanten Haltekräfte für die Armatur auf.

In den abhängigen Ansprüchen sind bevorzugte Weiterbildungen der Erfindung angegeben. Zur Vermeidung von Wiederholungen sind diese genauso wie weitere Merkmale, Einzelheiten und Vorteile der Erfindung aus der nachfolgenden Beschreibung entnehmbar, in der ein Ausführungsbeispiel anhand der beigefügten Zeichnungen näher erläutert wird. Es zeigen:
- Fig. 1: zeigt einen Axialschnitt durch eine Schubstangenarmatur, und
- Fig. 2: einen vergrößerten Detailschnitt des prozessseitigen Endes der Schubstangenarmatur gemäß Fig. 1.

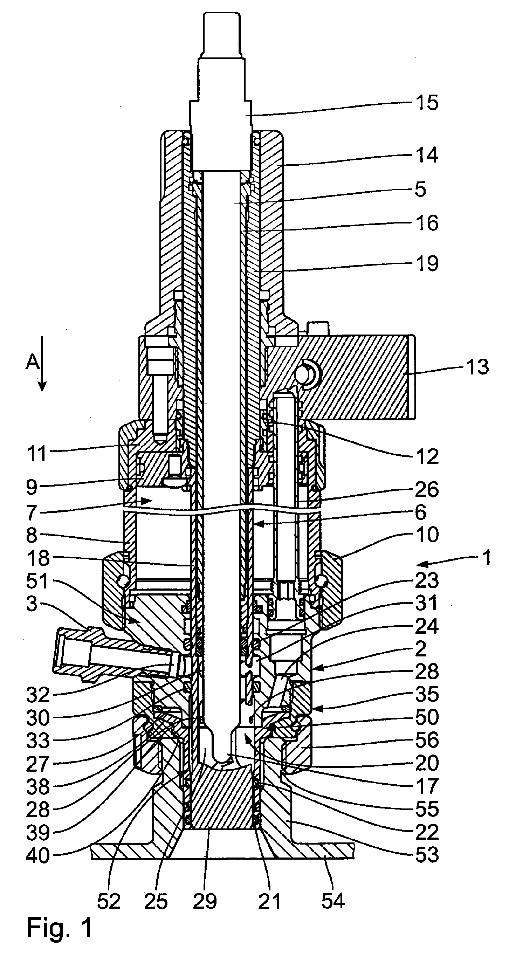

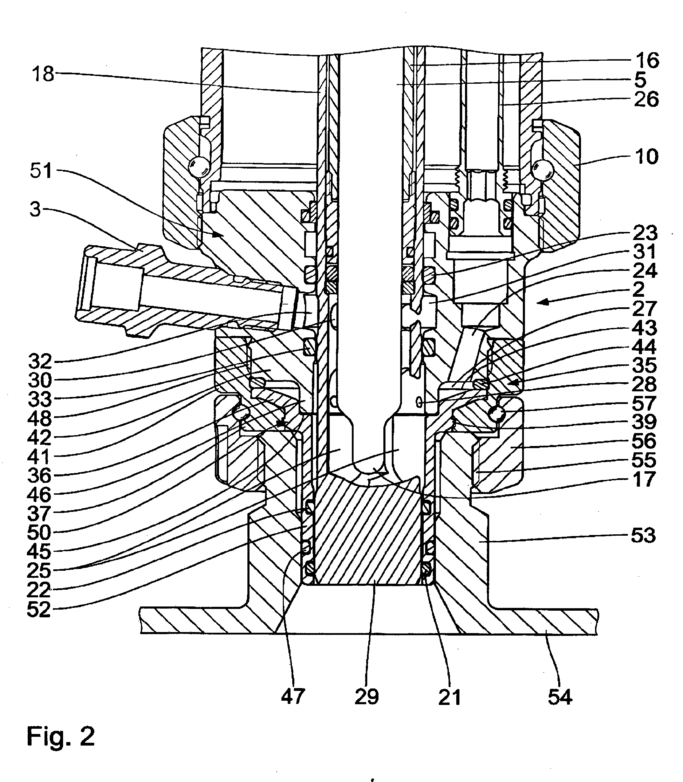

Die in Fig. 1 in ihrer Gesamtheit dargestellte Schubstangenarmatur weist als tragendes Teil eine Sondenhalterung 1 auf, die im Wesentlichen aus einem mehrteiligen Spülkammerteil 2 besteht. Letzteres weist als Prozessanschluss ein als Ganzes mit 50 bezeichnetes Zapfenteil sowie ein darin sitzendes Sockelteil 51 auf. Das Zapfenteil 50 greift - wie insbesondere aus Fig. 2 deutlich wird -mit einem zentralen, hülsenförmigen Zapfen 52 in einen Ingoldstutzen 53 ein, der an einen Prozessbehälter 54 angeschweißt ist. Am prozessabseitigen Ende des Ingoldstutzens 53 ist ein Außengewinde 55 angebracht, auf das eine Überwurfmutter 56 aufschraubbar ist. Letztere ist am Zapfenteil 50 in noch näher zu erläuternder Weise drehbar gelagert. Der detaillierte Aufbau des Zapfenteils 50 wird weiter unten noch näher erläutert.

Zur Überwachung des Prozessfluids ist ein Messsensor 5 beispielsweise in Form einer Glaselektrode zur pH-Messung des Prozessfluids vorgesehen. Der Messsensor 5 sitzt in einem als Ganzes mit 6 bezeichneten Schubrohr, das mit Hilfe eines pneumatischen Antriebes 7 aus der in Fig. 1 gezeigten, ausgefahrenen Spül- oder Servicestellung in eine in das Prozessfluid eintauchende, eingefahrene Messstellung verschiebbar ist. Der pneumatische Antrieb 7 ist durch einen Pneumatikzylinder 8 gebildet, in dem ein Kolben 9 durch eine nicht näher dargestellte Druckluftbeaufschlagung in und entgegen der Ausfahrrichtung A verschiebbar ist. Der Pneumatikzylinder 8 ist mittels einer Überwurfmutter 10 auf dem Sockelteil 51 des Spülkammerteils 2 lösbar fixiert. Am gegenüberliegenden Ende ist der Pneumatikzylinder 8 durch einen einstückig angeformten Deckel 11 geschlossen, in dem eine Schiebeführungsbuchse 12 für das Schubrohr 6 angelegt ist.

Auf den Deckel 11 des Pneumatikzylinders 8 ist ein Medienanschlussblock 13 auswechselbar aufgesetzt, über den die bereits erwähnte Druckluft für den pneumatischen Antrieb 7 sowie noch näher zu erläuternde Reinigungs-, Spül- und Kalibrierlösungen - im Folgenden als "Wartungsflüssigkeiten" bezeichnet - über nicht näher dargestellte Zuleitungen in die Schubstangenarmatur eingeführt werden.

Auf der dem Deckel 11 abgewandten Seite des Medienanschlussblocks 13 ist noch eine Schutzkappe 14 aufgesetzt, die den Messsensor 5 bis zu dessen oberem Griffteil 15 umgibt.

Das den Messsensor 5 aufnehmende Schubrohr 6 ist in sich ebenfalls mehrteilig aufgebaut. Es weist innen ein Hüllrohr 16 zur direkten Aufnahme des Messsensors 5 auf, das sich vom Griffteil 15 aus nach unten erstreckt und deutlich vor der Messspitze 17 des Messsensors 5 endet. Messsensor 5 und Hüllrohr 16 sitzen in einer in Axialrichtung zweigeteilten Rohraufnahme gebildet aus dem prozessseitigen Tauchrohr 18 und dem in der Schiebeführungsbuchse 12 im Deckel 11 des Pneumatikzylinders 8 in Axialrichtung verschiebbar geführten Führungsrohr 19, das zusammen mit dem Tauchrohr 18 am Kolben 9 befestigt ist.

Zur Reinigung, Spülung und Kalibrierung des in das Spülkammerteil 2 zurückgezogenen Messsensors 5 ist im Spülkammerteil 2 eine Spülkammer 20 angelegt, die prozessseitig durch zwei Ringdichtungen 21, 22 und zum Pneumatikzylinder 8 hin durch eine rückwärtige Ringdichtung 23 begrenzt ist. Die Ringdichtungen 21, 22, 23 schließen den Ringspalt zwischen dem Tauchrohr 18 und seiner Rohrführung im Spülkammerteil 2 ab.

In dem die Messspitze 17 des Messsensors 5 umgebenden Bereich ist das Tauchrohr 18 mit langlochförmigen, peripher verteilten Spülöffnungen 25 durchbrochen, über die die erwähnten Wartungsflüssigkeiten zur Messspitze 17 und damit zu dem messaktiven Teil des Messsensors 5 gelangen können. Die Wartungsflüssigkeiten werden über den Medienanschlussblock 13 und eine axialparallel durch den Pneumatikzylinder 8 und den Kolben 9 hindurchführende Zulaufleitung 26 eingeführt, die von oben in das Spülkammerteil 2 mündet. Über eine Bohrung 24 ist eine Fluidverbindung zu dem Ringkanal 27 zwischen Zapfenteil 50 und Sockelteil 51 des Spülkammerteils 2 hergestellt, von wo aus die Wartungsflüssigkeiten über dünne Düsen 28 in die Spülkammer 20 eingespritzt werden. Es bildet sich eine wirbelartige Strömung vom Boden 29 der Spülkammer 20 zum oberen Ende der Spülkammer 20 aus. Dort sind Austrittsöffnungen 30 für die Wartungsflüssigkeit in das Tauchrohr 18 eingeformt, die in einen im Sockelteil 51 des Spülkammerteil 2 angelegten Ringkanal 31 münden. Von diesem führt im Wesentlichen in Radialrichtung eine Abströmbohrung 32 weg, an die eine Fluidleitung 3 zur Wegführung der Wartungsflüssigkeiten anschließbar ist.

Das funktionale Zusammenspiel der Ringdichtungen 21, 22, 23 und dem im Übrigen noch auf Höhe des Tauchrohrs 18 zwischen den Spülöffnungen 25 und den Austrittsöffnungen 30 vorgesehenen Zwischendichtring 33 mit dem Tauchrohr 18 beim Ein- und Ausfahren des Schubrohrs 6 relativ zum Spülkammerteil 2 in das Prozessfluid hinein und wieder heraus ist der älteren deutschen Patentanmeldung 10 2005 036 865.4 der Anmelderin entnehmbar. Da dies nicht zum Kern der vorliegenden Erfindung gehört, erübrigt sich eine detaillierte Beschreibung.

Die spezielle Ausgestaltung des Zapfenteils 50, wie sie die vorliegende Erfindung charakterisiert, wird nun anhand von Fig. 2 näher beschrieben. So ist das Zapfenteil 50 in einen äußeren, mit der Überwurfmutter 56 in Eingriff stehenden Haltering 35 aus Metall, insbesondere Edelstahl sowie den - bereits erwähnten - Zapfen 52 aus Kunststoffmaterial zweigeteilt. Als Kunststoffmaterialien kommen z.B. PEEK, PVDF oder PP zum Einsatz. Dieser Zapfen 52 ist im Haltering 35 durch eine an seiner prozessabgewandten Seite angeformte Ringschulter 36 verankert, die in einer entsprechenden Ringaufnahme 37 am Haltering 35 sitzt. Ringschulter 36 und Ringaufnahme 37 weisen dabei kegelstumpfförmige Kontaktflächen 38 auf.

Ferner sind an die Ringschulter 36 und die Ringaufnahme 37 angrenzend jeweils wechselseitig eingreifende, ringförmige Rastvorsprünge 39 und Rasthinterschneidungen 40 am Zapfen 52 und am Haltering 35 ausgebildet. Damit können Haltering 35 und Zapfen 52 in einem Montagezwischenschritt miteinander verklipst werden und sitzen damit bereits relativ fest aneinander.

Der Haltering 35 ist über seinen Ringkörper 41 mit dem flachzylindrischen Endabschnitt des Sockelteils 51 verschraubt. Dazu ist eine Gewindeverbindung 48 (Fig. 2) zwischen den beiden Komponenten vorgesehen. Dabei wird zwischen der pozessabseitigen Ringfläche 43 der Ringschulter 36 des Zapfens 52 eine zum Ringkörper 41 des Halterings und dem darin sitzenden Sockelteil 51 abdichtende Ringdichtung 44 eingesetzt. Damit ist die Spülkammer 20 in der Zone zwischen Sockelteil 51, Haltering 35 und Zapfen 52 nach außen abgedichtet. Zur weiteren stabilen Stützung des aus Kunststoff bestehenden Zapfens 52 ist dieser am prozessabseitigen Ende innerhalb der Ringschulter 36 mit einer Ringstufe 45 versehen, die an einem Ringvorsprung 46 am prozessseitigen Ende des Sockelteils 51 anliegt.

Die bereits erwähnte Drehlagerung der Überwurfmutter 56 am Haltering 35 erfolgt über eine Kugellagerung 57, sodass die Überwurfmutter 56 besonders leichtgängig auf dem Außengewinde 55 des Ingoldstutzens 53 aufschraubbar ist.

Die Ringdichtungen 21, 22 zwischen dem dickwandigen Boden 29 des Tauchrohrs 18 und der Innenwand des in den Ingoldstutzens 53 hineinragenden Zapfens 52 sowie eine weitere Ringdichtung 47 an der Außenseite des Zapfens 52 zur Abdichtung zur Innenwand des Ingoldstutzens 53 hin sind jeweils in Ringnuten angeordnet, die in den Zapfen 52 eingearbeitet sind. Letztere lassen sich aufgrund der Ausbildung des Zapfens 52 aus Kunststoffmaterial besonders einfach beispielsweise bei dessen Spritzgießen mit einformen.

## Patentansprüche

1. Sondeneinrichtung zur Messung von Prozessgrößen, insbesondere Schubstangenarmatur, umfassend
- eine Sondenhalterung (1), die einen als Zapfenteil (50) mit Überwurfmutter (56) ausgebildeten Prozessanschluss zur Anbindung der Sondeneinrichtung an einen Ingoldstutzen (53) eines Prozessbehälters (54) mittels der Überwurfmutter (56) und eine Spülkammer (2) aufweist,
- einen für die Erfassung eines Prozessparameters ausgelegten Messsensor (5), der in einem axial im Zapfenteil (50) verschiebbaren Tauchrohr (18) angeordnet ist, und
- eine Antriebseinrichtung (7) zum axialen Verschieben des Tauchrohrs (18) mit Messsensor (5) zwischen einer in den Prozessbehälter (54) eingefahrenen Messstellung und einer daraus ausgefahrenen Spül- oder Servicestellung, in der der Messsensor (5) in der Spülkammer (2) angeordnet ist,
**gekennzeichnet durch**
- eine Zweiteilung des Zapfenteils (50) in einen äußeren, mit der Überwurfmutter (56) in Eingriff stehenden Haltering (35) aus Metall und einem darin verankerten, in den Ingoldstutzen (53) unter Abdichtung zum Prozess einsetzbaren Zapfen (52) aus Kunststoffmaterial.

2. Sondeneinrichtung nach Anspruch 1, **dadurch gekennzeichnet, dass** im Zapfen (52) ein Teil der Spülkammer (20) liegt.

3. Sondeneinrichtung nach Anspruch 1 oder 2, **dadurch gekennzeichnet, dass** der Zapfen (52) an seiner prozessabgewandten Seite mit einer Ringschulter (36) versehen ist, die in einer Ringaufnahme (37) am Haltering (35) sitzt.

4. Sondeneinrichtung nach Anspruch 3, **dadurch gekennzeichnet, dass** Ringschulter (36) und Ringaufnahme (37) kegelstumpfförmige Kontaktflächen (38) aufweisen.

5. Sondeneinrichtung nach Anspruch 3 oder 4, **dadurch gekennzeichnet, dass** angrenzend an die Ringschulter (36) und die Ringaufnahme (37) wechselseitig eingreifende, ringförmige Rastvorsprünge (39) und Rasthinterschneidungen (40) an Zapfen (52) und Haltering (35) ausgebildet sind.

6. Sondeneinrichtung nach einem der Ansprüche 3 bis 5, **dadurch gekennzeichnet, dass** auf einer prozessabseitigen Ringfläche (43) der Ringschulter (36) des Zapfens (52) eine zum Haltering (35) und zu einem darin sitzenden Sockelteil (51) der Sondeneinrichtung abdichtende Ringdichtung (44) angeordnet ist.

7. Sondeneinrichtung nach Anspruch 6, **dadurch gekennzeichnet, dass** der Zapfen (52) mit einer Ringstufe (45) an einem Ringvorsprung (46) am prozessseitigen Ende des Sockelteils (51) anliegt.

8. Sondeneinrichtung nach einem der vorgenannten Ansprüche, **dadurch gekennzeichnet, dass** am Haltering (35) die mit einem Außengewinde (55) am Ingoldstutzen (53) des Prazessbehälters (54) in Schraubeingriff bringbare Überwurfmutter (56) drehbar gelagert ist.

9. Sondeneinrichtung nach Anspruch 8, **dadurch gekennzeichnet, dass** die Überwurfmutter (56) am Haltering (35) kugelgelagert (57) drehbar ist.

10. Sondeneinrichtung nach einem der vorgenannten Ansprüche, **dadurch gekennzeichnet, dass** der Haltering (35) aus Edelstahl besteht.

11. Sondeneinrichtung nach einem der vorgenannten Ansprüche, **dadurch gekennzeichnet, dass** als Kunststoffmaterialien für den Zapfen (52) PEEK, PVDF oder PP eingesetzt werden.

## Claims

1. Sample device for measuring process variables, in particular a push rod instrument comprising
- a sample holder (1), which comprises a process connection configured as a pin element (50) with a union nut (56) for connecting the sample device to an ingold connection (53) of a process container (54) using the union nut (56) and a rinsing chamber (2),
- a measuring sensor (5) set up for determining a process parameter which measuring sensor is arranged in an immersion tube (18) axially displaceable in the pin element (50) and
- a drive device (7) for the axial displacement of the immersion tube (18) with measuring sensor (5) between a measuring position inserted into the process container (54) and a rinsing or service position removed therefrom in which the measuring sensor (5) is arranged in the rinsing chamber (2),
**characterised by**
- a division of the pin element (50) into an outer retaining ring (35) made of metal in engagement with the union nut (56) and a pin (52) made of plastic material secured therein and insertable into the ingold connection (53) sealed from the process.

2. Sample device according to claim 1, **characterised in that** a portion of the rinsing chamber (20) lies in the pin (52).

3. Sample device according to claim 1 or 2, **characterised in that** the pin (52) is provided on its process-remote side with an annular shoulder (36) which sits in an annular mount (37) on the retaining ring (35).

4. Sample device according to claim 3, **characterised in that** the annular shoulder (36) and annular mount (37) have truncated cone-shaped contact surfaces (38).

5. Sample device according to claim 3 or 4, **characterised in that** adjoining the annular shoulder (36) and the annular mount (37) mutually engaging, annular locking projections (39) and locking undercuts (40) are formed on the pin (52) and retaining ring (35).

6. Sample device according to one of claims 3 to 5, **characterised in that** an annular seal (44) sealing to the retaining ring (35) and to a base part (51) of the sample device sitting therein is arranged on a process-remote annular surface (43) of the annular shoulder (36) of the pin (52).

7. Sample device according to claim 6, **characterised in that** the pin (52) bears on the process-side end of the base part (51) with an annular step (45) on an annular projection (46).

8. Sample device according to one of the preceding claims, **characterised in that** the union nut (56) which can be brought into screw engagement with an external thread (55) on the ingold connection (53) of the process container (54) is rotatably mounted on the retaining ring (35).

9. Sample device according to claim 8, **characterised in that** the union nut (56) is mounted rotatably on the retaining ring (35) by ball bearings (57).

10. Sample device according to one of the preceding claims, **characterised in that** the retaining ring (35) is made of stainless steel.

11. Sample device according to one of the preceding claims, **characterised in that** PEEK, PVDF or PP are used as plastic materials for the pin (52).

## Revendications

1. Dispositif de sonde destiné à la mesure de grandeurs de processus, notamment armature de jambe de force, comprenant
- un système de retenue (1) de sonde, qui présente en tant que pièce de retenue (50) un raccord de processus conçu avec un écrou-raccord (56) pour le raccordement du dispositif de sonde à un manchon Ingold (53) d'un réservoir de traitement (54) au moyen de l'écrou-raccord (56), et une chambre de nettoyage (2),
- un capteur de mesure (5), conçu pour la saisie d'un paramètre de processus, qui est disposé dans un tuyau d'immersion (18) pouvant être déplacé axialement dans la pièce de retenue (50), et
- un dispositif d'entraînement (7), destiné au déplacement axial du tuyau d'immersion (18), comportant le capteur de mesure (5), entre une position de mesure adoptée dans le réservoir de traitement (54) et une position de nettoyage ou de service, qui en est externe, dans laquelle le capteur de mesure (5) est disposé dans la chambre de nettoyage (2),
**caractérisé par**
- une division de la pièce de retenue (50) en deux parties, en un anneau de retenue (35) en métal, externe, étant en prise avec l'écrou-raccord (56), et en une goupille (52), y étant ancrée, en matière synthétique, pouvant être insérée dans le manchon Ingold (53), moyennant une étanchéité vis-à-vis du processus.

2. Dispositif de sonde selon la revendication 1, **caractérisé en ce qu'**une partie de la chambre de nettoyage (20) se situe dans la goupille (52).

3. Dispositif de sonde selon les revendications 1 ou 2, **caractérisé en ce que** la goupille (52) est munie d'un épaulement annulaire (36) sur sa face opposée au processus, qui repose sur un support annulaire (37) sur l'anneau de retenue (35).

4. Dispositif de sonde selon la revendication 3 **caractérisé en ce que** l'épaulement annulaire (36) et le support annulaire (37) présentent des surfaces de contact (38) tronconiques.

5. Dispositif de sonde selon les revendications 3 ou 4, **caractérisé en ce que** des saillies (39) d'encliquetage de forme annulaire et des évidements (40) d'encliquetage, étant en prise tour à tour, sont conçus à la limite de l'épaulement annulaire (36) et du support annulaire (37) sur la goupille (52) et sur l'anneau de retenue (35).

6. Dispositif de sonde selon l'une des revendications 3 à 5, **caractérisé en ce qu'**un joint (44) annulaire est disposé sur une surface annulaire (43) de l'épaulement annulaire (36) de la goupille (52) située en aval du processus et assurant l'étanchéité vis-à-vis de l'anneau de retenue (35) du dispositif de sonde et d'une partie d'assise (51), qui y repose.

7. Dispositif de sonde selon la revendication 6 **caractérisé en ce que** la goupille (52) se plaque sur une avancée annulaire (46) au niveau de l'extrémité de la partie d'assise (51) située vers le processus à l'aide d'un palier annulaire (45).

8. Dispositif de sonde selon l'une des revendications précitées, **caractérisé en ce qu'**un écrou-raccord (56), pouvant être mis en prise par vissage sur le manchon Ingold (53) du réservoir de traitement (54) à l'aide d'un filetage externe (55), est disposé, en pouvant tourner, sur l'anneau de retenue (35).

9. Dispositif de sonde selon la revendication 8 **caractérisé en ce que** l'écrou-raccord (56) peut tourner, équipé d'un roulement à billes (57), sur l'anneau de retenue (35).

10. Dispositif de sonde selon l'une des revendications précitées, **caractérisé en ce que** l'anneau de retenue (35) est constitué d'acier noble.

11. Dispositif selon l'une des revendications précitées, **caractérisé en ce qu'**en tant que matériaux synthétiques employés pour la goupille (52), on emploie le PEEK, le PVDF ou le PP.
